# EUROPÄISCHE PATENTANMELDUNG

(11) **EP 2 913 128 A1**
(43) Veröffentlichungstag der Anmeldung: **02.09.2015**
(21) Anmeldenummer: 15156511.6
(22) Anmeldetag: 25.02.2015
(51) Int. Cl.: B23B 5/16, B23B 51/10, B23D 71/00

(54) **Werkzeug und Verfahren zur zerspanenden Bearbeitung eines Rohrelements an einem Ende**

(30) Priorität: 28.02.2014 DE 202014001763 U
(71) Anmelder: Joiner's Bench GmbH, 42859 Remscheid (DE)
(72) Erfinder: Sgarra, Luciano, 42929 Wermelskirchen (DE); Mainhart, Patrick, 97499 Donnersdorf (DE)
(74) Vertreter: Schwöbel, Thilo K.

(57) **Zusammenfassung**

Es wird ein Werkzeug (1) und ein Verfahren zur zerspanenden Bearbeitung eines Rohrelements an einem Ende des Rohrelements (2) vorgeschlagen, wobei die Bearbeitung sowohl Entgraten, Anpassen der lichten Weite als auch Anfasen umfasst, wobei das Werkzeug mindestens eine Schneidekontur umfasst, wobei das Werkzeug um die Längsachse des Rohrelements relativ zum Rohrelement rotierbar vorgesehen ist und wobei das Werkzeug zur Bearbeitung des Rohrelements in einem Arbeitsschritt konfiguriert ist.

## Beschreibung

### Stand der Technik

Die Erfindung betrifft ein Werkzeug zur zerspanenden Bearbeitung eines Rohrelements an einem Ende des Rohrelements.

Bei der Verbindung von Rohrelementen mittels Fittings tritt das Problem auf, dass die abgelängten Rohrelemente durch die zerteilende Bearbeitung beim Ablängen an den Kanten der Stirnfläche des Rohrelements scharfe Grate aufweisen und/oder gegenüber ihren Sollabmessungen verformt sind. Beides kann dazu führen, dass ein Fitting nicht in das Rohr geschoben werden kann und/oder Undichtigkeiten entstehen, etwa weil eine Dichtung beschädigt wird.

Zur Entgratung der radial außenliegenden Kante der Stirnfläche eines Rohrelements sind Werkzeuge bekannt, beispielsweise aus der Druckschrift GB 2 361 451 A. Darüber hinaus sind Werkzeuge bekannt, die das Rohr durch eine umformende Bearbeitung aufweiten, wie in der Druckschrift EP 1 055 488 A2 offenbart. Die bekannten Werkzeuge weisen jedoch den Nachteil auf, dass zum Entgraten und zum Anpassen der lichten Weite des Rohrelements an einen Nenndurchmesser mehrere Arbeitsschritte mit mehreren Werkzeugen nötig sind.

### Offenbarung der Erfindung

Der Erfindung liegt die Aufgabe zugrunde, ein Werkzeug der eingangs beschriebenen Art zu schaffen, bei dem die Nachteile des Standes der Technik behoben werden. Darüber hinaus ist es wünschenswert, dass die radial innenliegende Kante der Stirnfläche des Rohrelements nach der Bearbeitung eine Fase aufweist, wodurch einerseits das Hineinschieben eines Elements erleichtert werden könnte, andererseits bei der Führung von Flüssigkeiten unerwünschte Effekte wie etwa turbulente Strömungen und/oder Kavitationen vermieden oder vermindert werden.

Die Aufgabe wird erfindungsgemäß durch ein Werkzeug zur zerspanenden Bearbeitung eines Rohrelements gelöst, wobei die Bearbeitung sowohl Entgraten, Anpassen der lichten Weite als auch Anfasen an einem Ende des Rohrelements umfasst, wobei das Werkzeug mindestens eine Schneidekontur umfasst, wobei das Werkzeug um die Längsachse des Rohrelements relativ zum Rohrelement rotierbar vorgesehen ist und wobei das Werkzeug zur Bearbeitung des Rohrelements in einem Arbeitsschritt konfiguriert ist.

Durch die Erfindung ist es in vorteilhafter Weise möglich, mit einem einzigen Werkzeug sowohl eine Fase an der außenliegenden Kante der Stirnfläche des Rohrelements als auch an der innenliegenden Kante der Stirnfläche des Rohrelements zu schaffen, das Rohrelement an seinem Ende zu entgraten, und die lichte Weite des Rohrelements an den Nenninnendurchmesser anzupassen. Unter dem Begriff Rohrelement wird hierbei beispielsweise ein gerades oder gebogenes Rohr, ein gerader oder gebogener Rohrabschnitt oder ein Abschnitt eines verzweigten Rohres, beispielsweise eines T-Stücks, verstanden. Unter dem Begriff der lichten Weite wird in diesem Zusammenhang der lokale Rohrinnendurchmesser, insbesondere am Rohrende des Rohrelements, verstanden. Dabei sollen Verformungen und Gratbildungen berücksichtigt werden. Unter dem Begriff der Längsachse des Rohrelements wird hierbei die Achse verstanden, um die das Rohrelement im Wesentlichen, d.h. insbesondere unter Vernachlässigung von Verformungen und Gratbildungen, rotationssymmetrisch ist. Durch das Ablängen eines Rohrelements entstehen oft scharfe Grate und/oder das Rohrelement wird durch die Kraft, die bei der zerteilenden Bearbeitung auf das Rohrelement wirkt, zur Längsachse hin deformiert, wobei sich die lichte Weite verringert.

Indem das Entgraten, Anpassen der lichten Weite und Anfasen in einem Arbeitsschritt erfolgt, ist es in vorteilhafter Weise möglich, Arbeitszeit einzusparen, insbesondere, weil es nicht notwendig ist, für verschiedene Teilbearbeitungsschritte unterschiedliche Werkzeuge zu benutzen und - etwa auf Arbeitsgeräte wie Bohrmaschinen oder Schrauber - zu montieren. Darüber hinaus ist es erfindungsgemäß vorteilhaft möglich mit einer geringeren Anzahl von Werkzeugen die gleichen Arbeitsschritte zu erledigen, was eine vorteilhafte Werkzeuglogistik zur Folge hat.

Bevorzugt handelt es sich bei dem Rohrelement um ein Metallrohr, beispielsweise um ein Edelstahlrohr, beziehungsweise um ein Rohrelement eines Metallrohres, beispielsweise eines Edelstahlrohres. Dazu besteht das Werkzeug bevorzugt aus einem Material, das zur spanenden Bearbeitung von Metall, beispielsweise von Edelstahl, vorgesehen ist. Das Werkzeug besteht bevorzugt aus Werkzeugstahl. Das Werkzeug ist bevorzugt einstückig, insbesondere bei den kleineren Nennweiten, hergestellt. Bei den größeren Nennweiten ist es erfindungsgemäß vorgesehen, dass das Werkzeug zweiteilig oder mehrteilig ausgebildet ist, wobei solche mehreren Teile insbesondere axial hintereinander verdrehsicher formschlüssig verbunden sind und insbesondere nicht stoffschlüssig verbunden sind. Hierdurch ist es erfindungsgemäß in besonders vorteilhafter Weise möglich, dass das Werkzeug mittels einer CNC-Maschine weitgehend automatisiert herstellbar ist.

Weiterhin ist es bevorzugt vorgesehen, dass die Schneidekontur des Werkzeugs einen ersten Schneidekonturabschnitt zum Entgraten und Anfasen der radial außenliegenden Kante der Stirnfläche des Rohrelements aufweist und dass die Schneidekontur einen zweiten Schneidekonturabschnitt zum Entgraten und Anfasen der radial innenliegenden Kante der Stirnfläche des Rohrelements aufweist.

Hierdurch erleichtert die Fase der radial außenliegenden Kante in vorteilhafter Weise das Aufschieben eines Fittings auf das Rohr. Weiterhin verringert die Fase der radial innenliegenden Kante die Entstehung von Kavitationen, wenn beim Gebrauch des Rohrelements Flüssigkeit durch das Rohr transportiert wird. Durch das Entfernen der Grate der radial außenliegenden Kante wird in vorteilhafter Weise die Bildung von Undichtigkeiten zwischen dem Rohrelement und einem Fitting und die Beschädigung eines Dichtelements, beispielsweise eines Dichtungsrings, verhindert.

Die Schneidekonturabschnitte können dabei gerade sein oder einem Kurvenverlauf folgen. Die Schneidekonturabschnitte können innerhalb einer Ebene liegen oder versetzt sein. Die Schneidekonturabschnitte können ineinander übergehen oder räumlich voneinander getrennt sein.

Weiterhin ist es bevorzugt vorgesehen, dass die Schneidekontur einen dritten Schneidekonturabschnitt zum Anpassen der lichten Weite des Endes des Rohrelements aufweist.

Hierdurch ist es in vorteilhafter Weise möglich, dass die lichte Weite des Rohrelements an einen Nenndurchmesser des Rohrelements angepasst wird.

Weiterhin ist es bevorzugt vorgesehen, dass der dritte Schneidekonturabschnitt in einer radialen Ebene verlaufend in einem Winkel zur Längsachse des Werkzeugs ausgerichtet ist, so dass der bei der Bearbeitung des Rohrelements in das Rohrelement hineinragende Teil des Werkzeugs an der dem Ende des Rohrelements abgewandten Seite einen Durchmesser aufweist, der kleiner als die lichte Weite des Rohrelements ist. Unter der Längsachse des Werkzeugs wird dabei die Achse verstanden, um die das Werkzeug rotationssymmetrisch bzw. um bestimmte Winkel rotationssymmetrisch vorgesehen ist. Unter einer radialen Ebene wird dabei jede Ebene verstanden, in der die Längsachse des Rohrelements bzw. des Werkzeugs liegt.

Hierdurch ist es in vorteilhafter Weise möglich, dass Variationen der lichten Weite toleriert werden, weil der vorderste (dem Rohrelement zugewandte) Bereich des Werkzeugs kleiner ist als die kleinste lichte Weite, die typischerweise (bei einem vorgegebenen Nenndurchmesser des Rohrelements) anzutreffen ist. Die lichte Weite variiert auf der einen Seite durch Variationen der Bearbeitungsparameter beim Ablängen des Rohrelements, wie die Wahl des Werkzeugs oder die aufgebrachte Kraft. Darüber hinaus weisen Rohre, insbesondere Edelstahlrohre oder Stahlrohre, die für Wärme-, Gas- oder Sanitärinstallationen genutzt werden, eine von der Druckstufe abhängige Wanddicke auf, so dass die Innendurchmesser selbst von Rohren mit gleicher Nennweite DN (Diameter Nominal) variieren können.

Der Winkel, in dem der dritte Schneidekonturabschnitt in einer radialen Ebene verlaufend zur Längsachse des Werkzeugs ausgerichtet ist, beträgt beispielsweise zwischen 1 und 15 Grad, bevorzugt zwischen 3 und 10 Grad, besonders bevorzugt zwischen 5 und 7 Grad, ganz besonders bevorzugt ungefähr 6 Grad. Erfindungsgemäß wesentlich ist, dass der dritte Schneidekonturabschnitt mit seinem Bereich kleinsten Durchmessers in das abgeschnittene Rohrende mit geringfügigem Spiel eingeführt werden kann.

Hierdurch ist es in vorteilhafter Weise möglich, dass ein hinreichend großes Intervall an möglichen lichten Weiten abgedeckt wird, gleichzeitig aber der dritte Schneidekonturabschnitt so flach zur Längsachse des Werkzeugs angeordnet ist, dass der dritte Schneidekonturabschnitt einen hinreichend großen Abschnitt des Rohrelements bearbeitet, insbesondere den gesamten durch das vorhergehende Trennverfahren verformten Bereich.

Es ist bevorzugt vorgesehen, dass das Werkzeug mindestens zwei, bevorzugt mindestens drei Schneidekonturen, und, insbesondere bei größeren Nenndurchmessern, mehr als drei Schneidekonturen, umfasst.

Hierdurch wird in vorteilhafter Weise erreicht, dass das Werkzeug bei der Bearbeitung weitgehend zentriert wird, wodurch das Werkzeug ruhig läuft und sich nicht im Rohrelement verkantet.

Gemäß einer Ausführungsform ist es vorgesehen, dass mindestens eine Schneidekontur nur einen Teil der drei Schneidekonturabschnitte umfasst. Hierbei ist es bevorzugt vorgesehen, dass das Werkzeug eine ungerade Anzahl Schneidekonturen umfasst, wobei ein erster Teil der Schneidekonturen erste, zweite und dritte Schneidekonturabschnitte umfasst, wobei ein zweiter Teil der Schneidekonturen nur einen dritten Schneidekonturabschnitt umfasst, und wobei die Schneidekonturen des zweiten Teils der Schneidekonturen zwischen den Schneidekonturen des ersten Teils der Schneidekonturen angeordnet sind. Anders formuliert sind über den Umfang des Werkzeugs verteilt abwechselnd Schneidekonturen mit allen drei Schneidekonturabschnitten und Schneidekonturen nur mit den dritten Schneidekonturabschnitten angeordnet. Hierdurch wird in vorteilhafter Weise erreicht, dass die Anpassung der lichten Weite - bei der typischerweise besonders viel Material abgetragen werden muss - besonders intensiv durchgeführt wird.

Bevorzugt sind die Schneidekonturen in gleichmäßigem Abstand bezüglich einer Drehung um die Längsachse des Werkzeugs angeordnet.

Hierdurch lässt sich das Werkzeug in vorteilhafter Weise gleichmäßig drehen.

In einer Ausführungsform liegen die Schneidekonturabschnitte der Schneidekontur in einer radialen Ebene.

Hierdurch ist das Werkzeug in vorteilhafter Weise einfach herzustellen, weil überwiegend rechte Winkel vorhanden sind.

In einer anderen Ausführungsform folgt ein Teil der Schneidekonturabschnitte, bevorzugt der dritte Schneidekonturabschnitt, zumindest teilweise dem Verlauf einer Helix.

Hierdurch werden die Kräfte, die das Rohrelement auf das Werkzeug ausübt, in vorteilhafter Weise gleichmäßig über den Umfang des Werkzeugs verteilt, weil in verschiedenen Winkelbereichen bezüglich des Umfangs des Werkzeugs gleichzeitig gespant wird. Darüber hinaus ist es hierdurch in vorteilhafter Weise möglich, dass abgetragenes Material durch die Drehung des Werkzeugs, ähnlich wie bei einem Bohrer, vom Bearbeitungsort wegtransportiert wird, und so die weitere Bearbeitung nicht behindert.

Es ist bevorzugt vorgesehen, dass mindestens ein Schneidekonturabschnitt mindestens einer Schneidekontur einen Keilwinkel von ungefähr 90 Grad aufweist.

Hierdurch ist die Herstellung des Werkzeugs in vorteilhafter Weise vergleichsweise einfach möglich.

In einer Ausführungsform ist es vorgesehen, dass die Schneidekonturabschnitte bzw. wenigstens Teile der Schneidekonturabschnitte Feilenzähne umfassen. Bevorzugt ist es vorgesehen, dass der dritte Schneidekonturabschnitt Feilenzähne umfasst.

Hierdurch wird in vorteilhafter Weise ein zuverlässiges Entgraten und/oder Anpassen der lichten Weite und/oder Anfasen gewährleistet.

Bevorzugt weist das Werkzeug einen Schaft, insbesondere einen Sechskantschaft, auf, oder ist dazu vorgesehen, mit einem Schaft, insbesondere einem Sechskantschaft, verbunden zu werden.

Hierdurch ist es in vorteilhafter Weise möglich, das Werkzeug an eine Maschine, beispielsweise eine Bohrmaschine, anzuschließen.

Die Erfindung betrifft weiterhin eine Werkzeuganordnung aus einem Werkzeug mit den erfindungsgemäßen Merkmalen, einer Schutzhaube und einem Schaft, wobei die Schutzhaube mittels des Schaftes am Werkzeug befestigt ist.

Es ist hierdurch erfindungsgemäß möglich, eine Schutzhaube ohne die Verwendung weiterer Befestigungsmittel am Werkzeug zu befestigen. Die Schutzhaube kann einen Schutz der Schneidekontur während der Lagerung oder dem Transport des Werkzeugs gewährleisten, beispielsweise in einem Werkzeugkoffer zusammen mit anderen Gegenständen, die die Schneidekontur beschädigen könnten. Die Schutzhaube kann aber auch einen Schutz der Bedienperson vor Verletzungen durch Berührung der Schneidekontur oder durch sich bildende umherfliegende Späne gewährleisten.

Bevorzugt ist die Schutzhaube im Wesentlichen zylinderförmig, ggf. mit Ausnehmungen, ausgebildet.

Hierdurch ist es in vorteilhafter Weise möglich, die Schutzhaube im Wesentlichen rotationssymmetrisch um die Längsachse des Werkzeugs auszubilden, wodurch die Verletzungsgefahr für eine Bedienperson beim Rotieren des Werkzeugs vermindert wird.

Bevorzugt weist die Schutzhaube darüber hinaus in der Mantelwand Öffnungen auf.

Hierdurch wird in vorteilhafter Weise verhindert, dass sich die Schutzhaube während der Benutzung des Werkzeugs mit Spänen füllt, und so die weitere Bearbeitung behindert wird.

Ein weiterer Gegenstand der vorliegenden Erfindung betrifft ein Verfahren zur zerspanenden Bearbeitung eines Rohrelements (2) an einem Ende des Rohrelements, wobei die Bearbeitung sowohl Entgraten, Anpassen der lichten Weite als auch Anfasen umfasst, wobei ein Werkzeug um die Längsachse des Rohrelements relativ zum Rohrelement rotiert und wobei das Rohrelement (2) in einem Arbeitsschritt bearbeitet wird.

Weitere Vorteilhafte Ausgestaltungsmerkmale der Erfindung sind in den Unteransprüchen sowie der folgenden Beschreibung enthalten.

### Kurze Beschreibung der Zeichnungen

Anhand der in der Zeichnung dargestellten, bevorzugten Ausführungsbeispiele soll die Erfindung nun genauer erläutert werden. Dabei zeigt
- Fig. 1a: eine Hybridansicht aus Seitenansicht und Längsschnitt der erfindungsgemäßen Werkzeuganordnung Rohrelements vor der Bearbeitung mit dem erfindungsgemäßen Werkzeug,
- Fig. 1b: eine Hybridansicht aus Seitenansicht und Längsschnitt der erfindungsgemäßen Werkzeuganordnung und eines Rohrelements während der Bearbeitung mit dem erfindungsgemäßen Werkzeug,
- Fig. 1c: eine Hybridansicht aus Seitenansicht und Längsschnitt der erfindungsgemäßen Werkzeuganordnung und eines Rohrelements nach der Bearbeitung mit dem erfindungsgemäßen Werkzeug, und
einen vergrößerten Ausschnitt des bearbeiteten Rohrelements, wobei die Kanten bzw. entsprechenden Fasen der Stirnfläche dargestellt sind,
- Fig. 2: eine Seitenansicht des erfindungsgemäßen Werkzeugs mit gerader Schneide,
- Fig. 3: eine Seitenansicht einer Ausführungsform des erfindungsgemäßen Werkzeugs mit Feilenzähnen,
- Fig. 4: Seitenansicht einer Ausführungsformen des erfindungsgemäßen Werkzeugs mit schräger Schneide,
- Fig. 5: Seitenansicht einer Ausführungsform des erfindungsgemäßen Werkzeugs mit helixförmiger Schneide.

### Ausführungsformen der Erfindung

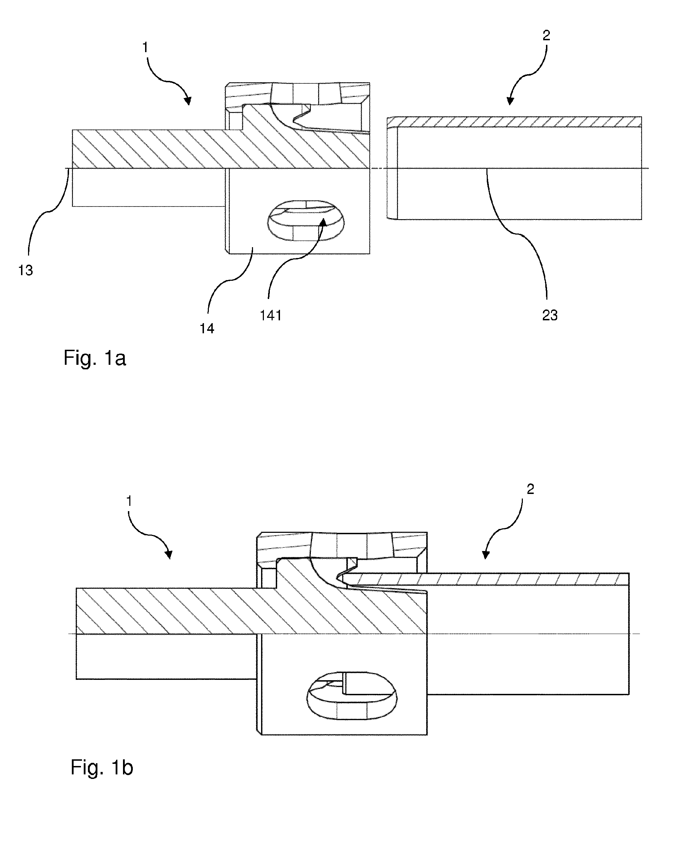

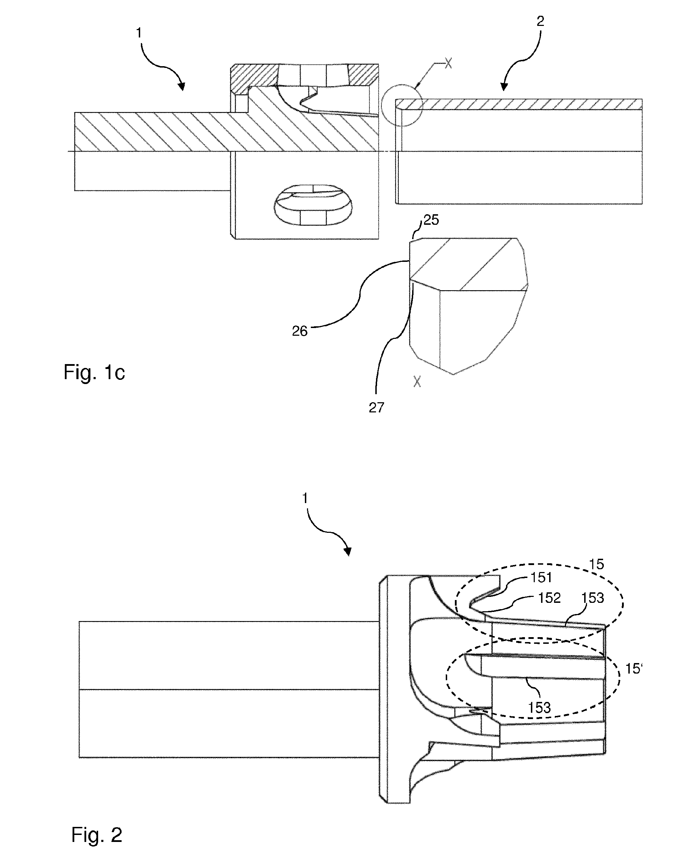

Die Figuren 1 a-c zeigen schematisch die Bearbeitung eines Rohrelements mit der erfindungsgemäßen Werkzeuganordnung. Dargestellt sind das Werkzeug 1, die Schutzhaube 14 mit Öffnungen 141, das Rohrelement 2, sowie die Längsachse 13 des Werkzeugs und die Längsachse 23 des Rohrelements, wobei die Längsachsen 13 und 23 zusammenfallen. Es ist erfindungsgemäß bevorzugt, dass die Längsachsen 13 und 23 zumindest annähernd zusammenfallen. In Figur 1a sind am linken Ende des Rohrelements schematisch eine Umformung und eine Gratbildung dargestellt, die durch die vorausgegangene zerteilende Bearbeitung des Rohrelements entstanden sind. Im Gegensatz dazu zeigt Figur 1c - insbesondere im vergrößerten Ausschnitt - das bearbeitete Rohrelement, das gratfreie Flächen aufweist, wobei insbesondere die Stirnfläche 26, die radial außenliegende Kante 25 bzw. Fase 25 der Stirnfläche 26, sowie die radial innenliegende Kante 27 bzw. Fase 27 der Stirnfläche 26 dargestellt ist.

Figur 2 zeigt ein Ausführungsbeispiel des Werkzeugs ohne die Schutzhaube 14 in einer gegenüber den Figuren 1 a-c vergrößerten Darstellung. Durch gestrichelte Linien sind die Bereiche der Schneidekonturen 15, 15' dargestellt. Die Schneidekontur 15 umfasst einen ersten Schneidekonturabschnitt 151, einen zweiten Schneidekonturabschnitt 152 und einen dritten Schneidekonturabschnitt 153, währenddessen die Schneidekontur 15' lediglich einen dritten Schneidekonturabschnitt 153 umfasst. Der erste Schneidekonturabschnitt 151 ist zum Bearbeiten der radial außenliegenden Kante 25 der Stirnfläche 26, bzw. zur Herstellung der radial außenliegenden Fase 25 der Stirnfläche 26 vorgesehen. Der zweite Schneidekonturabschnitt 152 ist zur Bearbeitung der radial innenliegenden Kante 27 der Stirnfläche 26, bzw. zur Herstellung der radial innenliegenden Fase 27 der Stirnfläche 26 vorgesehen. Der dritte Schneidekonturabschnitt 153 ist zum Anpassen der lichten Weite des Rohrelements 2 an einen Nenninnendurchmesser.

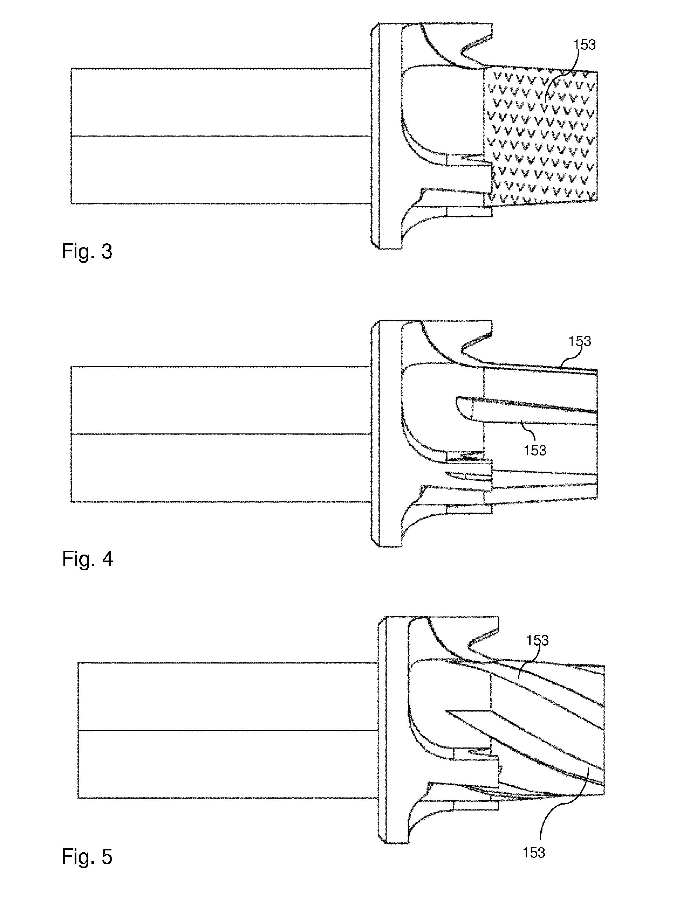

Das in Figur 2 dargestellte Ausführungsbeispiel umfasst außerdem eine gerade Anzahl Schneidekonturen 15, 15', wobei die erste Hälfte der Schneidekonturen 15 erste 151, zweite 152 und dritte 153 Schneidekonturabschnitte umfasst, wobei die zweite Hälfte der Schneidekonturen 15' nur einen dritten Schneidekonturabschnitt 153 umfasst, und wobei die Schneidekonturen 15' der zweiten Hälfte der Schneidekonturen zwischen den Schneidekonturen 15 der ersten Hälfte der Schneidekonturen angeordnet sind. Dies ist im Übrigen auch bei den in den Figuren 4 und 5 dargestellten Ausführungsbeispielen der Fall.

Figur 3 zeigt ein Ausführungsbeispiel, bei dem der dritte Schneidekonturabschnitt 153 als Feilenzähne ausgebildet ist.

Die Figur 4 zeigt ein Ausführungsbeispiel, bei dem die dritten Schneidekonturabschnitte 153 schräg verlaufen.

Die Figur 5 zeigt ein Ausführungsbeispiel, bei dem die dritten Schneidekonturabschnitte 153 dem Verlauf einer Helix folgen.

### Ausführungen der Erfindung

1. Ausführung: Werkzeug 1, zur zerspanenden Bearbeitung eines Rohrelements 2 an einem Ende des Rohrelements, dadurch gekennzeichnet, dass die Bearbeitung sowohl Entgraten, Anpassen der lichten Weite als auch Anfasen umfasst, wobei das Werkzeug mindestens eine Schneidekontur 15, 15' umfasst, wobei das Werkzeug um die Längsachse 23 des Rohrelements relativ zum Rohrelement 2 rotierbar vorgesehen ist und wobei das Werkzeug zur Bearbeitung des Rohrelements in einem Arbeitsschritt konfiguriert ist.
2. Ausführung: Werkzeug nach Ausführung 1, dadurch gekennzeichnet, dass das Rohrelement 2 ein Metallrohr ist.
3. Ausführung: Werkzeug nach einer der vorhergehenden Ausführungen, dadurch gekennzeichnet, dass die Schneidekontur 15 einen ersten Schneidekonturabschnitt 151 zum Entgraten und Anfasen der radial außenliegenden Kante der Stirnfläche 26 des Rohrelements 2 aufweist und dass die Schneidekontur 15 einen zweiten Schneidekonturabschnitt 152 zum Entgraten und Anfasen der radial innenliegenden Kante 27 der Stirnfläche 26 des Rohrelements 2 aufweist.
4. Ausführung: Werkzeug nach einer der vorhergehenden Ausführungen, dadurch gekennzeichnet, dass die Schneidekontur 15, 15' einen dritten Schneidekonturabschnitt 153 zum Anpassen der lichten Weite des Endes des Rohrelements 2 aufweist.
5. Ausführung: Werkzeug nach einer der vorhergehenden Ausführungen, dadurch gekennzeichnet, dass der dritte Schneidekonturabschnitt 153 in einer radialen Ebene verlaufend in einem Winkel zur Längsachse des Werkzeugs 13 ausgerichtet ist, so dass der bei der Bearbeitung des Rohrelements 2 in das Rohrelement 2 hineinragende Teil des Werkzeugs 1 an der dem Ende des Rohrelements 2 abgewandten Seite einen Durchmesser aufweist, der kleiner als die lichte Weite des Rohrelements 2 ist.
6. Ausführung: Werkzeug nach einer der vorhergehenden Ausführungen, dadurch gekennzeichnet, dass
   -- der Winkel zwischen 1 und 15 Grad, bevorzugt zwischen 3 und 10 Grad, besonders bevorzugt zwischen 5 und 7 Grad, ganz besonders bevorzugt ungefähr 6 Grad beträgt
      oder dass
   -- der dritte Schneidekonturabschnitt mit seinem Bereich kleinsten Durchmessers in das abgeschnittene Rohrende mit geringfügigem Spiel eingeführt werden kann.
7. Ausführung: Werkzeug nach einer der vorhergehenden Ausführungen, dadurch gekennzeichnet, dass das Werkzeug 1 mindestens zwei, bevorzugt mindestens drei oder mehr als drei Schneidekonturen 15, 15' umfasst.
8. Ausführung: Werkzeug nach einer der vorhergehenden Ausführungen, dadurch gekennzeichnet, dass mindestens eine Schneidekontur nur einen Teil der drei Schneidekonturabschnitte umfasst.
9. Ausführung: Werkzeug nach einer der vorhergehenden Ausführungen, dadurch gekennzeichnet, dass die Schneidekonturen 15, 15' in gleichmäßigem Abstand bezüglich einer Drehung um die Längsachse 13 des Werkzeugs 1 angeordnet sind.
10. Ausführung: Werkzeug nach einer der vorhergehenden Ausführungen, dadurch gekennzeichnet, dass die Schneidekonturabschnitte 151, 152, 153 der Schneidekontur 15, 15' in einer radialen Ebene liegen.
11. Ausführung: Werkzeug nach einer der vorhergehenden Ausführungen, dadurch gekennzeichnet, dass ein Teil der Schneidekonturabschnitte 151, 152, 153, bevorzugt der dritte Schneidekonturabschnitt 153, einen schrägen Verlauf aufweist oder zumindest teilweise dem Verlauf einer Helix folgt.
12. Ausführung: Werkzeug nach einer der vorhergehenden Ausführungen, dadurch gekennzeichnet, dass mindestens ein Schneidekonturabschnitt 151, 152, 153 mindestens einer Schneidekontur 15, 15' einen Keilwinkel von ungefähr 90 Grad aufweist.
13. Ausführung: Werkzeug nach einer der vorhergehenden Ausführungen, dadurch gekennzeichnet, dass die Schneidekonturabschnitte 151, 152, 153 wenigstens zum Teil Feilenzähne umfassen.
14. Ausführung: Werkzeug nach einer der vorhergehenden Ausführungen, dadurch gekennzeichnet, dass das Werkzeug 1 einen Schaft, insbesondere einen Sechskantschaft, aufweist oder dazu vorgesehen ist, mit ein einem Schaft, insbesondere einem Sechskantschaft, verbunden zu werden.
15. Ausführung: Werkzeuganordnung aus einem Werkzeug nach einer der vorhergehenden Ausführungen und einer Schutzhaube 14 und einem Schaft, wobei die Schutzhaube 14 mittels des Schaftes am Werkzeug 1 befestigt ist.
16. Ausführung: Werkzeuganordnung nach einer der vorhergehenden Ausführungen, dadurch gekennzeichnet, dass die Schutzhaube 14 im Wesentlichen zylinderförmig ausgebildet ist.
17. Ausführung: Werkzeuganordnung nach einer der vorhergehenden Ausführungen, dadurch gekennzeichnet, dass die Schutzhaube 14 in der Mantelwand Öffnungen 141 aufweist.
18. Ausführung: Verfahren zur zerspanenden Bearbeitung eines Rohrelements 2 an einem Ende des Rohrelements, insbesondere mittels eines Werkzeugs 1 nach einer der vorhergehenden Ausführungen, dadurch gekennzeichnet, dass die Bearbeitung sowohl Entgraten, Anpassen der lichten Weite als auch Anfasen umfasst, wobei das Werkzeug 1 um die Längsachse des Rohrelements relativ zum Rohrelement rotiert und wobei das Rohrelement 2 in einem Arbeitsschritt bearbeitet wird.

### BEZUGSZEICHEN

- 1: Werkzeug
- 2: Rohrelement
- 13: Längsachse des Werkzeugs
- 14: Schutzhaube
- 15, 15': Schneidekontur
- 23: Längsachse des Rohrelements
- 25: radial außenliegende Kante
- 26: Stirnfläche
- 27: radial innenliegende Kante
- 141: Öffnung
- 151: erster Schneidekonturabschnitt
- 152: zweiter Schneidekonturabschnitt
- 153: dritter Schneidekonturabschnitt

## Patentansprüche

1. Werkzeug (1), zur zerspanenden Bearbeitung eines Rohrelements (2) an einem Ende des Rohrelements, **dadurch gekennzeichnet, dass** die Bearbeitung sowohl Entgraten, Anpassen der lichten Weite als auch Anfasen umfasst, wobei das Werkzeug mindestens eine Schneidekontur (15, 15') umfasst, wobei das Werkzeug um die Längsachse (23) des Rohrelements relativ zum Rohrelement (2) rotierbar vorgesehen ist und wobei das Werkzeug zur Bearbeitung des Rohrelements in einem Arbeitsschritt konfiguriert ist.

2. Werkzeug nach Anspruch 1, **dadurch gekennzeichnet, dass** das Rohrelement (2) ein Metallrohr ist.

3. Werkzeug nach einem der vorhergehenden Ansprüche, **dadurch gekennzeichnet, dass** die Schneidekontur (15) einen ersten Schneidekonturabschnitt (151) zum Entgraten und Anfasen der radial außenliegenden Kante der Stirnfläche (26) des Rohrelements (2) aufweist und dass die Schneidekontur (15) einen zweiten Schneidekonturabschnitt (152) zum Entgraten und Anfasen der radial innenliegenden Kante (27) der Stirnfläche (26) des Rohrelements (2) aufweist.

4. Werkzeug nach einem der vorhergehenden Ansprüche, **dadurch gekennzeichnet, dass** die Schneidekontur (15, 15') einen dritten Schneidekonturabschnitt (153) zum Anpassen der lichten Weite des Endes des Rohrelements (2) aufweist.

5. Werkzeug nach einem der vorhergehenden Ansprüche, **dadurch gekennzeichnet, dass** der dritte Schneidekonturabschnitt (153) in einer radialen Ebene verlaufend in einem Winkel zur Längsachse des Werkzeugs (13) ausgerichtet ist, so dass der bei der Bearbeitung des Rohrelements (2) in das Rohrelement (2) hineinragende Teil des Werkzeugs (1) an der dem Ende des Rohrelements (2) abgewandten Seite einen Durchmesser aufweist, der kleiner als die lichte Weite des Rohrelements (2) ist.

6. Werkzeug nach einem der vorhergehenden Ansprüche, **dadurch gekennzeichnet, dass**
-- der Winkel zwischen 1 und 15 Grad, bevorzugt zwischen 3 und 10 Grad, besonders bevorzugt zwischen 5 und 7 Grad, ganz besonders bevorzugt ungefähr 6 Grad beträgt
oder dass
-- der dritte Schneidekonturabschnitt mit seinem Bereich kleinsten Durchmessers in das abgeschnittene Rohrende mit geringfügigem Spiel eingeführt werden kann.

7. Werkzeug nach einem der vorhergehenden Ansprüche, **dadurch gekennzeichnet, dass** das Werkzeug (1) mindestens zwei, bevorzugt mindestens drei oder mehr als drei Schneidekonturen (15, 15') umfasst.

8. Werkzeug nach einem der vorhergehenden Ansprüche, **dadurch gekennzeichnet, dass** mindestens eine Schneidekontur nur einen Teil der drei Schneidekonturabschnitte umfasst.

9. Werkzeug nach einem der vorhergehenden Ansprüche, **dadurch gekennzeichnet, dass** die Schneidekonturen (15, 15') in gleichmäßigem Abstand bezüglich einer Drehung um die Längsachse (13) des Werkzeugs (1) angeordnet sind.

10. Werkzeug nach einem der vorhergehenden Ansprüche, **dadurch gekennzeichnet, dass** die Schneidekonturabschnitte (151, 152, 153) der Schneidekontur (15, 15') in einer radialen Ebene liegen.

11. Werkzeug nach einem der vorhergehenden Ansprüche, **dadurch gekennzeichnet, dass** ein Teil der Schneidekonturabschnitte (151, 152, 153), bevorzugt der dritte Schneidekonturabschnitt (153), einen schrägen Verlauf aufweist oder zumindest teilweise dem Verlauf einer Helix folgt.

12. Werkzeug nach einem der vorhergehenden Ansprüche, **dadurch gekennzeichnet, dass** mindestens ein Schneidekonturabschnitt (151, 152, 153) mindestens einer Schneidekontur (15, 15') einen Keilwinkel von ungefähr 90 Grad aufweist.

13. Werkzeug nach einem der vorhergehenden Ansprüche, **dadurch gekennzeichnet, dass** die Schneidekonturabschnitte (151, 152, 153) wenigstens zum Teil Feilenzähne umfassen.

14. Werkzeug nach einem der vorhergehenden Ansprüche, **dadurch gekennzeichnet, dass** das Werkzeug (1) einen Schaft, insbesondere einen Sechskantschaft, aufweist oder dazu vorgesehen ist, mit ein einem Schaft, insbesondere einem Sechskantschaft, verbunden zu werden.

15. Verfahren zur zerspanenden Bearbeitung eines Rohrelements (2) an einem Ende des Rohrelements, insbesondere mittels eines Werkzeugs (1) nach einem der vorhergehenden Ansprüche, **dadurch gekennzeichnet, dass** die Bearbeitung sowohl Entgraten, Anpassen der lichten Weite als auch Anfasen umfasst, wobei das Werkzeug (1) um die Längsachse des Rohrelements relativ zum Rohrelement rotiert und wobei das Rohrelement (2) in einem Arbeitsschritt bearbeitet wird.
